**Europäisches Patentamt**

**European Patent Office**

**Office européen des brevets**

(19)

(11) Veröffentlichungsnummer: **0 332 846
B1**

# (12) EUROPÄISCHE PATENTSCHRIFT

(45) Veröffentlichungstag der Patentschrift:
17.10.90

(51) Int. Cl.⁵: **B60K 11/08**

(21) Anmeldenummer: 89102211.3

(22) Anmeldetag: **09.02.89**

(54) **Kühlergitter für Kraftfahrzeuge.**

(30) Priorität: **12.03.88 DE 3808284**

(43) Veröffentlichungstag der Anmeldung:
**20.09.89 Patentblatt 89/38**

(45) Bekanntmachung des Hinweises auf die Patenterteilung:
**17.10.90 Patentblatt 90/42**

(84) Benannte Vertragsstaaten:
**DE ES FR GB IT SE**

(56) Entgegenhaltungen:
**EP-A- 0 041 275
US-A- 4 379 648
US-A- 4 393 561**

(73) Patentinhaber: **Adam Opel Aktiengesellschaft,
Bahnhofsplatz 1 Postfach 17 10,
D-6090 Rüsselsheim(DE)**

(84) Benannte Vertragsstaaten: **DE FR GB IT SE**

(73) Patentinhaber: **General Motors Espana, S.A., Poligono
Entrerrios, Figueruelas (Zaragoza)(ES)**

(84) Benannte Vertragsstaaten: **ES**

(72) Erfinder: **Bauer, Helmut, Waldstrasse 18,
D-6097 Trebur 3(DE)**
Erfinder: **Reuter, Karl-Friedrich, Dipl.-Ing., Komotauer
Weg 6, D-6092 Kelsterbach(DE)**

(74) Vertreter: **Bergerin, Ralf, Dipl.-Ing. et al, Adam Opel
Aktiengesellschaft Bahnhofplatz 1 Postfach 17 10,
D-6090 Rüsselsheim(DE)**

## Beschreibung

Die Erfindung bezieht sich auf ein Kühlergitter für Kraftfahrzeuge, mit integrierten Klipsen, die bei der Montage des Kühlergitters in Öffnungen des Karosserie-Frontbleches eingreifen.

Es ist bekannt, derartige Kühlergitter, einschließlich der zur Befestigung derselben an der Frontpartie des Fahrzeuges dienenden Klipse, aus Kunststoff herzustellen. Bei bekannten Kühlergittern der in Rede stehenden Art gestaltet sich die Montage schwierig, wobei es insbesondere zu Deformationen im oberen Bereich des angrenzenden Karosserie-Frontbleches kommt. Darüber hinaus kommt es häufig zu einem Abbrechen der Klipse, weil diese zu stark ausgebildet sind und weil bei der Montage zu große Kräfte aufgewendet werden müssen. Ähnliche Schwierigkeiten treten auch bei der Demontage des Kühlergitters auf. Auch hier wird das angrenzende Frontblech der Karosserie deformiert, und es können Beschädigungen der Klipse stattfinden. Da die Klipse bei bekannten Kühlergittern, wie gesagt, sehr stark ausgebildet sind, müssen im angrenzenden Frontblech der Karosserie entsprechend große Öffnungen vorgesehen werden, die den Nachteil einer entsprechenden Querschnittsschwächung der Frontpartie des Fahrzeuges mit sich bringen.

Durch die DE 35 23 909 A1 ist ein Stoßfänger mit an ihm befestigtem Kühlergitter bekannt geworden. Hierbei greift das Kühlergitter mit einem Rastnocken durch ein Formloch des Stoßfängers. Am rückwärtigen Ende des Stoßfängers ist das Kühlergitter an ihm durch Fanghaken gehalten. Schlupframpen am Kühlergitter sitzen in diesem Bereich auf der Oberseite des Stoßfängers und bewirken eine Verschwenkung des Stoßfängers nach vorne, so daß ein eventuell vorhandener Spalt an der vorderen Kante des Kühlergitters zwischen Kühlergitter und Oberseite des Stoßfängers ausgeschlossen wird. Bei dieser bekannten Lösung ist also das Kühlergitter im wesentlichen dem Stoßfänger zugeordnet. Das bedeutet aber, daß sich die Befestigungsprobleme gegenüber dem angrenzenden Karosserieblech des Fahrzeugs auf die vergleichsweise großvolumige und schwere Baueinheit Stoßfänger-Kühlergitter verlagern.

Ausgehend von dem geschilderten Stand der Technik besteht die der Erfindung zugrundeliegende Aufgabe darin, ein Kühlergitter der eingangs bezeichneten Art so auszugestalten, daß einerseits eine einfache Montage und Demontage ohne Verformungen und/oder Beschädigungen der hierbei beteiligten Elemente erreicht wird, wobei aber andererseits eine Demontage des Kühlergitters - zur Sicherung gegen Diebstahl - nur bei geöffneter Fronthaube des Fahrzeugs möglich sein soll.

Gemäß der Erfindung wird diese komplexe Aufgabenstellung bei einem Kühlergitter der eingangs genannten Gattung dadurch gelöst, daß die Klipse jeweils eine entgegen der Montagerichtung gerichtete, elastisch nach unten abbiegbare Zunge mit einer Rastvertiefung für das angrenzende Karosserieblech aufweisen und daß die Befestigungsstelle der Zunge ("Drehpunkt") hinter der Ebene des angrenzenden Karosserieblech-Bereichs liegt. Vorzugsweise ist die Zunge einstückig an das Klips angeformt und ragt - ausgehend von ihrer Befestigungsstelle am vorderen Ende des Klips - in eine Aussparung des Klips hinein.

Bedingt durch die elastische Ausführung des erfindungsgemäßen Klipses und der Anordnung des "Drehpunktes" seiner Zunge wird vorteilhafterweise eine leichte Montage des Kühlergitters an der Frontpartie des betreffenden Fahrzeuges ermöglicht. Um die Demontage des Kühlergitters zu bewirken, muß aber die Zunge mit einem entsprechenden Werkzeug, z.B. einem Schraubenzieher, von oben nach unten gedrückt werden, damit die Zunge bzw. das Klips aus seiner Verrastung mit dem Frontblech des Fahrzeuges herausbewegt werden kann. Um das in Rede stehende Werkzeug in geeigneter Weise anzusetzen, ist es erforderlich, die Fronthaube zu öffnen. Erst anschließend kann das Kühlergitter in horizontaler Richtung nach vorn weggenommen werden. Die erfindungsgemäße Maßnahme bedeutet damit - vorausgesetzt, die Fronthaube läßt sich entsprechend verriegeln - eine wirksame Sicherung vor Diebstahl des Kühlergitters und Zugang zum Motorraum.

Da bei der Montage bzw. Demontage des Kühlergitters keinerlei Verformungen oder Beschädigungen der hierbei beteiligten Bauteile befürchtet zu werden brauchen, sind die betreffenden Teile auch bei mehrmaliger Montage und Demontage stets wiederverwendbar, und es ist hierbei keinerlei Verringerung der Haltekraft der Verklipsung zu befürchten.

Weitere Ausgestaltungen und Vorteile der Erfindung können den Ansprüchen 3-7 entnommen werden.

Zur weiteren Veranschaulichung und näheren Erläuterung der Erfindung dienen Ausführungsbeispiele, die in der Zeichnung dargestellt und nachstehend ausführlich beschrieben sind.

Es zeigt:

Fig. 1 einen Personenkraftwagen in Frontansicht,

Fig. 2 - ebenfalls in Frontansicht - den in Fig.1 mit A gekennzeichneten Außenbereich eines dort gezeigten Kühlergitters, in gegenüber Fig.1 vergrößerter Darstellung,

Fig. 3 den Gegenstand von Fig. 2, in Draufsicht gesehen, und

Fig. 4 einen Schnitt längs der Linie IV-IV in Fig. 1 bzw. in Fig. 2.

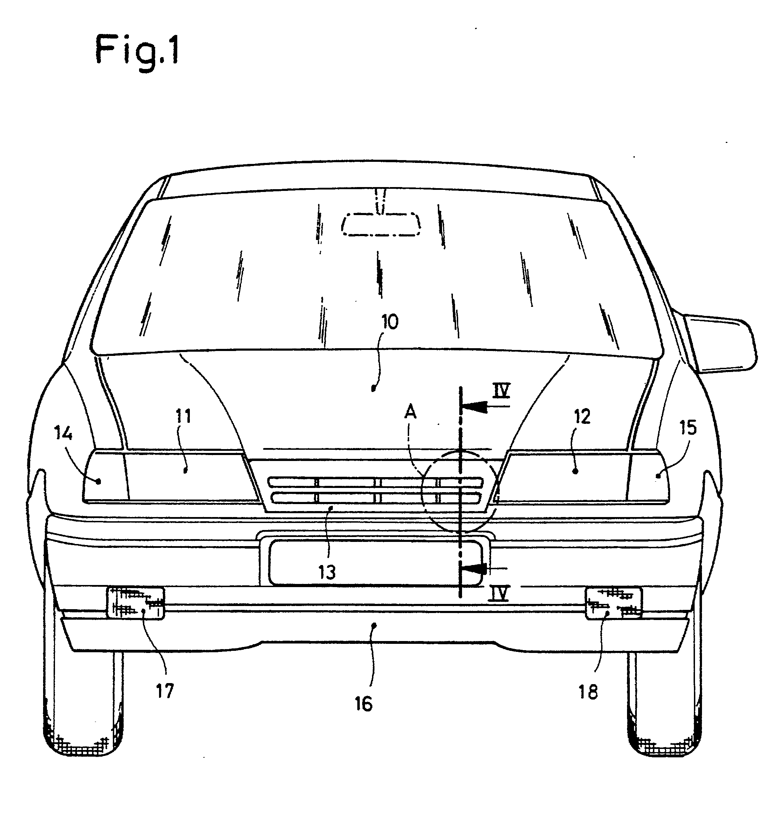

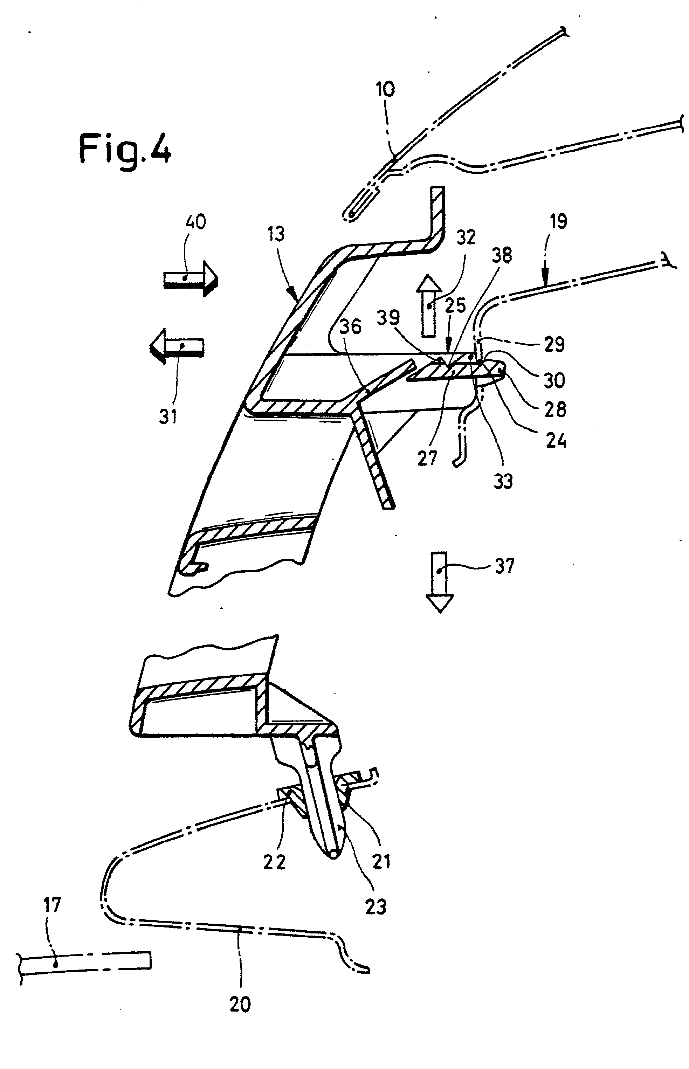

Es bezeichnet 10 die Motorhaube des in Fig. 1 dargestellten Personenkraftwagens, die an der Frontpartie in Scheinwerfer 11, 12 und ein dazwischen liegendes Kühlergitter 13 übergeht. Außenseitig der Scheinwerfer 11, 12 sind Fahrtrichtungsanzeiger 14, 15 zu erkennen, die auch als Warnblinkanlage fungieren können. Die durch die Teile 11-15 gebildete Vorderfront setzt sich nach unten in einem als Kunststoffteil ausgebildeten Stoßfänger 16 fort, der Aussparungen 17, 18 zur Anbringung von Nebelscheinwerfern besitzt. Der Stoßfänger 16 bildet ein von dem Kühlergitter 13 getrenntes Bauteil (vgl. hierzu auch Fig. 4).

Wie insbesondere Fig. 4 erkennen läßt, ist das als Kunststoffspritzteil ausgebildete Kühlergitter 13 an angrenzenden Karosseriebereichen lösbar befestigt. Hierbei bezeichnet 19 einen oberen Bereich und 20 einen unteren Bereich des Karosserie-Frontbleches. In dem unteren Bereich 20 des KarosserieFrontbleches sind in einer quer zur Fahrzeuglängsachse gerichteten Reihe, gleichmäßig über die Breite des Kühlergitters 13 verteilt, mehrere Stanzlöcher angeordnet, von denen eines aus Fig. 4 ersichtlich und mit 21 beziffert ist. In die Stanzlöcher 21 sind Buchsen 22 eingesetzt, die z.B. aus Kunststoff bestehen können. An der Unterseite des Kühlergitters 13 sind dornartige Zapfen 23 angeformt, die in montierter Stellung des Kühlergitters 13 in die jeweils zugeordnete Buchse 22 eingreifen.

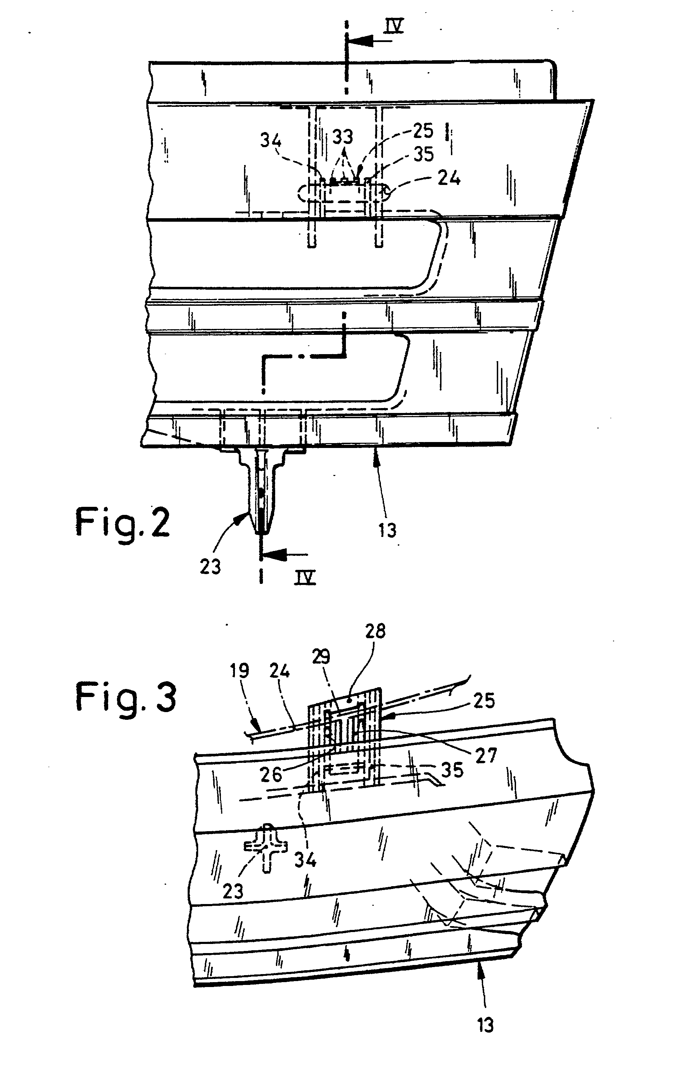

In den oberen Bereich 19 des Karosserie-Frontbleches sind mehrere langlochförmige Aussparungen 24 eingestanzt, die ebenfalls in Querrichtung des Fahrzeugs und auf einer der Breite des Kühlergitters 13 entsprechenden Länge in einer Reihe nebeneinander angeordnet sind. Die Aussparungen 24 dienen zur lösbaren Befestigung des Kühlergitters 13 in dessen oberem Bereich. Zu diesem Zweck sind an der dem Fahrzeug zugewandten Innenseite des Kühlergitters 13 mehrere Befestigungsklipse einstückig angeformt, von denen aus Fig. 2-4 eines ersichtlich und insgesamt mit 25 beziffert ist. Fig. 3 läßt erkennen, daß das Klips 25 in seinen Konturen etwa trapezförmig ausgebildet ist. Es handelt sich hierbei um ein an der Außenseite des Kühlergitters 13 liegendes Klips. Andere, mehr im Mittelbereich des Kühlergitters 13 liegende entsprechende Befestigungsklipse (nicht dargestellt) sollten aber - entsprechend dem dortigen Verlauf des oberen Karosserie-Frontbleches 19 - etwa rechteckförmig gestaltet sein. Fig. 3 macht weiterhin deutlich, daß das Klips 25 eine etwa rechteckförmige Aussparung 26 besitzt, die zur Aufnahme einer ebenfalls etwa Rechteckform aufweisenden Zunge 27 dient. Die Zunge 27 ist bei 28 einstückig an das Klips angeformt und läßt sich elastisch aus ihrer aus Fig. 4 ersichtlichen Normalstellung nach unten abbiegen. Fig. 4 macht deutlich, daß die Befestigungsstelle 28 der Zunge 27 am Klips 25 - diese Befestigungsstelle 28 bildet den sog. "Drehpunkt" der Zunge 27 - hinter der angrenzenden, mit 29 bezifferten Ebene des oberen Karosserie-Frontbleches 19 liegt.

Wie des weiteren insbesondere aus Fig. 4 hervorgeht, ist an der Oberseite der Zunge 27 eine Rastvertiefung 30 eingeformt, die mit dem angrenzenden Karosserieblech 29 bzw. 19, d.h. mit dem Rand der langlochförmigen Aussparung 24, zusammenwirkt. Fig. 4 macht deutlich, daß sich infolgedessen das Kühlergitter 13 nicht ohne weiteres aus seiner dort gezeigten Montageposition entfernen läßt. Versucht man das Kühlergitter 13, z.B. in Horizontalrichtung 31, abzunehmen, so erfolgt vielmehr eine verstärkte Eigenverrastung des Klipses 25 bzw. der Zunge 27 desselben, wobei sich die Zunge 27 infolge der oben beschriebenen Lage des "Drehpunktes" 28 sogar leicht nach oben, d.h. in Pfeilrichtung 32, bewegt. Zur Definition der aus Fig. 4 (wie auch aus Fig. 2 und 3) ersichtlichen Mon

tagestellung des Klipses 25 bzw. des Kühlergitters 13 sind an der Zunge 27 dreieckförmige Anschläge 33 angeformt, die mit den angrenzenden Partien 29 des oberen Karosserie-Frontbleches 19 zur Anlage kommen. Entsprechende dreieckförmige Anschläge können auch an den die Aussparung 26 des Klipses 25 beidseitig begrenzenden und mit 34, 35 bezifferten Stegen vorgesehen sein (vgl. Fig. 2 und 3).

Wie bereits oben erwähnt wurde, wird bei dem Versuch eines unbefugten Entfernens des Kühlergitters 13 die Verrastung des Klips 25 mit dem Frontblech 29 noch verstärkt, indem sich die Zunge 27 in Pfeilrichtung 32 nach oben bewegt. Bei Anwendung extrem hoher Kräfte in Pfeilrichtung 31 könnte es hierbei zu einem Beschädigen der Zunge 27 kommen. Um dies zu verhindern, ist indessen an der Innenseite des Kühlergitters 13 eine schräg nach oben gerichtete Abdeckung 36 angeformt (siehe Fig. 4), die in Montagestellung das vordere Ende der Zunge 27 des Klipses 25 übergreift.

Nach dem im vorstehenden Gesagten kann eine (befugte) Demontage des Kühlergitters 13 nur vorgenommen werden, wenn die Zunge 27 des Klipses 25 nach unten, d.h. in Pfeilrichtung 37, gedrückt wird. Hierzu ist ein geeignetes Werkzeug, z.B. ein Schraubenzieher, erforderlich, mittels dessen auf die Zunge 27 von oben her Kraft ausgeübt werden muß. Für den Ansatz eines solchen Demontagewerkzeuges weist die Zunge an ihrer Oberseite eine mit 38 bezeichnete, im Querschnitt dreieckförmige Vertiefung auf, die zwischen den bereits erwähnten dreieckförmigen Anschlägen 33 und weiteren, am Zungenende angeformten dreieckförmigen Erhebungen 39 ausgebildet ist. Die beschriebenen konstruktiven Gegebenheiten machen deutlich, daß eine Demontage des Klips 25 und damit auch des Kühlergitters 13 nur möglich ist, wenn vorher die Fronthaube 10 geöffnet wird. Auf diese Weise ist ein unbefugtes Entfernen des Kühlergitters 13 bei verriegelter Fronthaube 10 ausgeschlossen.

Auch bei der Montage des Kühlergitters 13 sollte die Front- bzw. Motorhaube 10 des Fahrzeugs in Öffnungsstellung sein. Das Kühlergitter 13 kann dann zuerst mittels der dornartigen Zapfen 23 in die Buchsen 22 eingesteckt und anschließend durch Einführen der Klipse 25 in die hierfür vorgesehenen Ausnehmungen 24 des oberen Karosserie-Frontbleches 19 verrastet werden. Der Einsteckbzw. Verrastungsvorgang erfolgt demgemäß in Pfeilrichtung 40 (siehe Fig. 4). Infolge der beschriebenen konstruktiven und elastischen Ausbildung des Klipses 25 gestaltet sich nicht nur die Demontage, sondern auch die Montage des Kühlergitters 13 sehr einfach. Auch nach mehrfacher Demontage und Wiedermontage des Kühlergitters 13 ist - bei fachgerechtem Vorgehen (siehe oben) - keinerlei Beschädigung des Klipses 25 bzw. Verringerung von dessen Haltekräften zu befürchten.

Obwohl eine separate Herstellung und anschließende Verbindung von Klips 25 und Kühlergitter 13, z.B. durch Kleben, denkbar ist, wird aus Gründen einer noch einfacheren Herstellung eine einstückige Ausbildung der genannten Teile bevorzugt. Eine einstückige Herstellung in einem Arbeitsgang läßt sich insbesondere dann realisieren, wenn Kühlergit

ter 13 und angeformte Klipse 25 ein gemeinsames, aus einem geeigneten Kunststoff, z.B. einem Thermoplasten, gefertigtes Spritzguß-Bauteil bilden. Der einfache Aufbau des erfindungsgemäßen Klipses begünstigt die hierfür erforderliche Werkzeugausführung.

**Patentansprüche**

1. Kühlergitter (13) für Kraftfahrzeuge, mit integrierten Klipsen (25), die bei der Montage des Kühlergitters in Öffnungen des Karosserie-Frontbleches (19) eingreifen, dadurch gekennzeichnet, daß die Klipse (25) jeweils eine entgegen der Montagerichtung (40) gerichtete, elastisch nach unten (37) abbiegbare Zunge (27) mit einer Rastvertiefung (30) für das angrenzende Karosserieblech (19, 24, 29) aufweisen und daß die Befestigungsstelle (28) der Zunge (27) hinter der Ebene (29) des angrenzenden Karosserieblech-Bereichs (19) liegt.

2. Kühlergitter nach Anspruch 1, dadurch gekennzeichnet, daß die Zunge (27) einstückig an das Klips (25) angeformt ist und - ausgehend von ihrer Befestigungsstelle (28) am vorderen Ende des Klips (25) - in eine Aussparung (26) des Klips (25) hineinragt.

3. Kühlergitter nach Anspruch 1 oder 2, dadurch gekennzeichnet, daß Klips (25), Zunge (27) und Aussparung (26) für die Zunge im Klips jeweils rechteckförmig oder im wesentlichen rechteckförmig ausgebildet sind.

4. Kühlergitter nach Anspruch 1, 2 oder 3, dadurch gekennzeichnet, daß an der Oberseite der Zunge (27) eine Vertiefung (38) für den Ansatz eines schraubenzieherartigen Demontagewerkzeuges ausgebildet ist.

5. Kühlergitter nach einem oder mehreren der vorstehenden Ansprüche,dadurch gekennzeichnet, daß an der Zunge (27) und an beidseitig der Zunge liegenden Stegen (34, 35) des Klipses (25) dreieckförmige Anschläge (33) zur Definition der Montageposition des Kühlergitters (13) am Karosserie-Frontblech (19, 20) einstückig angeformt sind.

6. Kühlergitter nach einem oder mehreren der vorstehenden Ansprüche,dadurch gekennzeichnet, daß an demselben eine den vorderen Bereich (d.h. das freie Ende) der Zunge (27) übergreifende Abdeckung (36) angeformt ist.

7. Kühlergitter nach einem oder mehreren der vorstehenden Ansprüche, dadurch gekennzeichnet, daß dasselbe, einschließlich der angeformten Klipse (25), aus Kunststoffmaterial, z.B. einem Thermoplasten, besteht und als Spritzgußteil ausgebildet ist.

**Claims**

1. Radiator grill (13) for motor vehicles with integrated clips (25) which during assembly of the radiator grill engage in openings of the front of the body shell (19), characterised in that the clips (25) each have an elastically downwardly (37) flexing tongue (27), directed counter to the assembly direction (40), with a clip-in recess (30) for the adjacent body metal (19, 24, 29), and that the fixing point (28) of the tongue (27) is arranged behind the plane (29) of the adjacent body shell region (19).

2. Radiator grill according to claim 1, characterised in that the tongue (27) is formed in one piece with the clips (25) and – starting from its fixing point (28) at the front end of the clip (25) – extends into a recess (26) of the clip (25).

3. Radiator grill according to claim 1 or 2, characterised in that the clips (25), the tongue (27) and the recess (26) for the tongue in the clip are each rectangular or substantially rectangular in shape.

4. Radiator grill according to claim 1, 2 or 3, characterised in that the top surface of the tongue (27) has a recess (38) for the attachment of a corkscrew-like dismantling tool.

5. Radiator grill according to at least one of the aforementioned claims, characterised in that on the tongue (27) of the clip (25) and on webs (34, 35), extending along both sides of the tongue, of the clip (25) triangular abutments (33) for defining the assembly positions of the radiator grill (13) are moulded as one piece to the body shell front (19, 20).

6. Radiator grill according to at least one of the aforementioned claims, characterised in that a covering (36) overlapping the forward region of the tongue (27) (i.e. the exposed end) is moulded to the radiator grill.

7. Radiator grill according to at least one of the aforementioned claims, characterised in that the radiator grill, including the moulded-in clips (25), consists of a plastics material, e.g. a thermoplastic, and is in the form of an injection moulded part.

**Revendications**

1. Calandre (13) pour véhicules automobiles comprenant des attaches (25) intégrées qui s'engagent dans des ouvertures de la tôle frontale de carosserie (19) lors du montage de la calandre, caractérisée en ce que les attaches (25) présentent chacune une languette (27) qui est orientée à l'inverse du sens de montage (40), peut être déformée par flexion élastiquement vers le bas (37) et comporte un cran d'arrêt (30) pour la tôle voisine de carosserie (19, 24, 29) et en ce que le point de fixation (28) de la languette (27) se trouve derrière le plan (29) de la zone voisine de tôle de carosserie (19).

2. Calandre selon la revendication 1, caractérisée en ce que la languette (27) est formée d'une seule pièce avec l'attache (25) et, à partir de son point de fixation (23) à l'extrémité avant de l'attache, pénètre dans un évidement (26) de l'attache (25).

3. Calandre selon la revendication 1 ou 2, caractérisée en ce que l'attache (25), la languette (27) et l'évidement (26) réalisé dans l'attache pour la languette ont chacun une forme rectangulaire ou essentiellement rectangulaire.

4. Calandre selon la revendication 1, 2 ou 3, caractérisée en ce qu'un creux (38) destiné à recevoir un outil de démontage du type tournevis est réalisé sur le côté supérieur de la languette (27).

5. Calandre selon une ou plusieurs des revendications precédentes, caractérisée en ce que des butées triangulaires (33) définissant la position de montage de la calandre (13) sur la tôle de carosserie (19, 20) sont formées d'une seule pièce sur la languette (27) et sur des barrettes (34, 35) se trouvant sur l'attache (25) de part et d'autre de la languette.

6. Calandre selon une ou plusieurs des revendications précédentes, caractérisée en ce qu'un élément (36) recouvrant la zone avant (c'est-à-dire l'extrémité libre) de la languette (27) est formé sur ladite calandre.

7. Calandre selon une ou plusieurs des revendications précédentes, caractérisée en ce que ladite calandre avec les attaches (25), est réalisée en matière plastique, par exemple en matiere thermoplastique, et est moulée par injection.

# Fig.1

EP 0 332 846 B1

Fig. 2

Fig. 3

# Fig.4